# EUROPEAN PATENT APPLICATION

(11) **EP 4 725 320 A2**
(43) Date of publication of application: **15.04.2026**
(21) Application number: 25223589.0
(22) Date of filing: 23.11.2020
(51) Int. Cl.: A23L 33/00

(54) **PURIFIED NON-DAIRY VEGETABLE PROTEIN**

(30) Priority: 10.12.2019 WO PCT/EP2019/084508
(62) Divisional of application: 20807813.9
(71) Applicant: N.V. Nutricia, 2712 HM Zoetermeer (NL)
(72) Inventor: Bala, Aveenash, 3584 CT Utrecht (NL); Dejax, Clémentine Julie Mélanie, 3584 CT Utrecht (NL)
(74) Representative: Nederlandsch Octrooibureau

(57) **Abstract**

The invention pertains to non-dairy proteins and nutritional compositions comprising non-dairy protein suitable for infant nutrition and a method of preparing a nutritional composition for infants or young children comprising non-dairy protein.

## Description

### FIELD OF THE INVENTION

The present invention relates vegetable proteins that have been purified to render them more suitable for use in nutritional compositions for infants and young children.

### BACKGROUND OF THE INVENTION

Human milk is the preferred food for infants. Human milk provides several bioactive factors that benefit the relatively immature immune system and the intestinal health of neonates early in life. However, it is not always possible or desirable to breastfeed an infant. In such cases infant formulae are a good alternative. These formulae should have an optimal composition in order to mimic the beneficial effects of human milk as close as possible.

Nowadays, parents wish to have options for sustainable products without negative impact on animal welfare and related issues. In particular sustainable protein sources are needed in infant formula. As alternative for dairy proteins, vegetable protein sources can be used.

Dairy animals filter a lot of contaminants out of their diets and thus prevent these contaminants to be present in the milk. This is important for the new-born since many of the natural defenses against such contaminants (e.g. liver function and other enzyme systems) are not fully operational yet as is the case in adults.

WO 2018/178271 relates to a method for the preparation of a vegetable protein hydrolysate having characteristics suitable for use in human food and more particularly in children's food, the hydrolysate as such and use thereof.

US 2017/208853 relates to a nutrient delivery system comprising a pod and a nutritional powder. The nutritional powder includes at least one hydrolyzed protein and at least one masking agent to reduce any bitterness associated with the resulting nutritional formula.

US 2005/079259 relates generally to the processing of soy-derived materials for use in various products. More particularly, it relates to a process producing highly functional soy protein using ultrafiltration followed by an enzymatic treatment.

US 2004/161512 is about soy-containing dough-based and baked product containing deflavored soy protein material are provided. Soy-containing baked products such as pizza crusts, cookies, crackers, and cereals are especially preferred.

Infant formulas are comprising soy protein as sole protein source have been on the market for many years. Most of these formulas are designed for babies suffering from cows milk allergy. These formulations, however, contain significant levels of chlorate. Since most infant formulas are powders to be reconstituted with drinking water that in most countries also contains relevant amounts of chlorate, it is highly desirable to provide infant formula powders with as low a chlorate level as possible.

It is therefore very important to ensure that incorporation of non-dairy proteins in e.g. infant formula does not increase chlorate content. Chlorate (ClO₃) originates from chlorine disinfectants widely and legally used in water treatment and food processing, water being by far the main contributor.

Increasingly, vegetable protein is regarded as an attractive alternative to dairy protein in infant formula. Not only vegans, but also parents concerned about the environmental impact of animal farming, prefer infant formulas in which dairy protein has been replaced by vegetable protein. Nowadays, there is a general opinion that we should use natural ingredients as much as possible, to keep ingredient processing to a minimum, and to reduce our 'footprint' on the planet. Pea, rice and potato rank among the most popular vegetable protein sources. Algae also are a suitable alternative source of non-dairy protein.

Therefore, a challenge exists to provide non-dairy protein with low chlorate level in order to make the protein source suitable for use in preparing infant and young child milk formula.

### SUMMARY OF THE INVENTION

The inventors have found that it is possible to effectively reduce the chlorate levels in vegetable proteins and algal proteins by using membrane filtration, e.g. ultrafiltration and/or nanofiltration, and by employing water that is essentially free of chlorate. The non-dairy proteins so obtained have a chlorate content of less than about 700 microgram per kg of the non-dairy protein and are perfectly suited for application in, for instance, infant formulas.

Thus, the present invention provides an edible composition comprising at least about 1 wt.%, calculated by weight of dry matter, of non-dairy protein selected from vegetable protein, algal protein and combinations thereof, said composition having between about 0 and 700 microgram chlorate per kg of the non-dairy protein. Related therewith, the invention provides an edible composition comprising protein, lipids and digestible carbohydrates wherein the protein providing 6.5 to 16% of the total calories, and wherein the composition comprises at least about 2 wt%, calculated by weight of dry matter, of non-dairy protein selected from vegetable protein, algal protein and combinations thereof, said composition having between 0 and 10 microgram chlorate per 100 g dry weight. The gist of reduced chlorate content according to the invention can be characterized in terms of protein or dry matter.

The invention also provides a method of preparing the aforementioned edible composition, said method comprising combining a non-dairy protein component with one or more other edible ingredients, said non-dairy protein component containing at least about 60 wt.%, calculated by weight of dry matter, of non-dairy protein selected from vegetable protein, algal protein and combinations thereof, and said non-dairy protein component having a chlorate level of between about 0 and 700 microgram per kg of the non-dairy protein protein. This way, the skilled person can arrive at a composition which is characterized in terms of between about 0 and 700 microgram chlorate per kg of the non-dairy protein, and/or between 0 and 10 microgram chlorate per 100 g dry weight of the composition.

The invention further provides a process of purifying non-dairy protein selected from vegetable protein, algal protein and combinations thereof, said process comprising the step of filtering an aqueous solution of the dairy protein over a membrane filter having a molecular weight cut-off of 1-20 kDa, said process comprising the addition of low chlorate water prior to the filtration step, said low chlorate water having a chlorate content of between about 0 and 100 microgram per liter. Low chlorate water may be obtained, for instance, by means of reverse osmosis.

The invention also relates to the use of a non-dairy protein component for preparing a nutritional composition selected from an infant formula and a young child formula, said non-dairy protein component containing at least about 60 wt.%, calculated by weight of dry matter, of non-dairy protein selected from vegetable protein, algal protein and combinations thereof, and said non-dairy protein component having a chlorate level of less than about 700 microgram per kg protein.

### LIST OF EMBODIMENTS

1 An edible composition comprising at least about 1 wt.%, calculated by weight of dry matter, of non-dairy protein selected from vegetable protein, algal protein and combinations thereof, wherein the non-dairy protein is non-hydrolyzed, said composition having between about 0 and 700 microgram chlorate per kg of the non-dairy protein, preferably between about 0 and 500 microgram chlorate per kg of the non-dairy protein, more preferably between about 0 and 400 microgram chlorate per kg of the non-dairy protein.
2 An edible composition comprising protein, lipids and digestible carbohydrates wherein the protein providing 6.5 to 16% of the total calories, and wherein the composition comprises at least about 2 wt%, calculated by weight of dry matter, of non-dairy protein selected from vegetable protein, algal protein and combinations thereof, said composition having between 0 and 10 microgram chlorate per 100 g dry weight.
3 Edible composition according to embodiment 1 or 2, wherein the edible composition is a powder.
4 Edible composition according to any one of embodiments 1 or 3, wherein the edible composition has between 0 and 10 microgram chlorate per 100 g composition.
5 Edible composition according to any one of the preceding embodiments, wherein the vegetable protein originates from one or more plants selected from rice, wheat, soy, corn, pea, carob, sunflower, potato, cotton, lentil or chickpea, hemp, pumpkin, fava bean, water lentils and quinoa.
6 Edible composition according to any one of the preceding embodiments, wherein the algal protein is selected from *Chlorella* protein, *Spirulina* protein and combinations thereof.
7 Edible composition according to embodiments 5 and 6, wherein the non-dairy protein component comprises (i) a vegetable protein selected from pea protein, rice protein and combinations thereof and (ii) an algal protein selected from *Chlorella* protein, *Spirulina* protein and combinations thereof.
8 Edible composition according to any one of the preceding embodiments, wherein the edible composition also comprises lipids and digestible carbohydrates, protein providing 6.5 to 16% of the total calories, lipids providing 25 to 65% of the total calories and digestible carbohydrates providing 20 to 80% of the total calories.
9 Edible composition according to any one of the preceding embodiments, wherein the edible composition comprises, calculated by weight of dry matter, 0.075-7.5 wt.% of 2'-fucosyllactose and/or 0.07-3.75 wt.% 3'-galactosyllactose.
10 Edible composition according to any one of the preceding embodiments, wherein the edible composition is an infant formula.
11 A method of preparing an edible composition according to any one of the preceding embodiments, said method comprising combining a non-dairy protein component with one or more other edible ingredients, said non-dairy protein component containing at least about 60 wt.%, calculated by weight of dry matter, of non-dairy protein selected from vegetable protein, algal protein and combinations thereof, and said non-dairy protein component having between about 0 and 700 microgram chlorate per kg of the non-dairy protein, preferably between about 0 and 500 microgram chlorate per kg of the non-dairy protein, more preferably between about 0 and 400 microgram chlorate per kg of the non-dairy protein.
12 Method according to embodiment 11, wherein the non-dairy protein component contains per kg of protein between about 0 and 1000 microgram, preferably between about 0 and 700 microgram, more preferably between about 0 and 500 microgram of low molecular components having a molecular weight of not more than 500 Da.
13 Method according to any one of embodiments 11-12, wherein the method further comprises admixing a source of non-digestible oligosaccharides, said source of non-digestible oligosaccharides containing, calculated by weight of dry matter, 3-15 wt.% of non-digestible oligosaccharides selected from non-digestible galacto-oligosaccharides, non-digestible fructo-oligosaccharides, human milk oligosaccharides and combinations thereof.
14 Method according to any one of embodiments 11-13, wherein the method further comprises admixing of a source of long chain polyunsaturated fatty acids (LC-PUFA), said source of LC-PUFA containing at least 0.5 wt.%, calculated by weight of the total fatty acid content of the source of LC-PUFA, of LC-PUFA selected form the group of DHA, ARA, EPA and combinations thereof.
15 A process of purifying non-dairy protein selected from vegetable protein, algal protein and combinations thereof, said process comprising the step of filtering an aqueous solution of the dairy protein over a membrane filter having a molecular weight cut-off of 1-20 kDa, said process comprising the addition of low chlorate water prior to the filtration step, said low chlorate water having a chlorate content of between about 0 and 100 microgram per liter.
**16** Use of a non-dairy protein component as defined or prepared in any one of embodiments 11-15 for preparing a nutritional composition selected from an infant formula and a young child formula, preferably an infant formula.

### DETAILED DESCRIPTON:

Accordingly, a first aspect of the invention relates to an edible composition comprising at least about 1 wt.%, calculated by weight of dry matter, of non-dairy protein selected from vegetable protein, algal protein and combinations thereof, said composition having between about 0 and 700 microgram chlorate per kg of the non-dairy protein.

Related therewith, the invention pertains to an edible composition comprising protein, lipids and digestible carbohydrates wherein the protein providing 6.5 to 16% of the total calories, and wherein the composition comprises at least about 2 wt%, preferably between 2 and 20 wt%, calculated by weight of dry matter, of non-dairy protein selected from vegetable protein, algal protein and combinations thereof, said composition having between 0 and 10 microgram chlorate per 100 g dry weight. Preferably the lipids provide 25 to 65% of the total calories and digestible carbohydrates provide 20 to 80% of the total calories.

The term "protein" as used herein refers to a polymer comprising a chain of at least 20 amino acid residues.

The term "vegetable protein" as used herein refers to an edible protein obtained from a plant material, e.g. seeds, roots or leaves.

The term "oligosaccharide" as used herein refers to a saccharide polymer comprising 3-10 monosaccharide residues.

The term "non-digestible oligosaccharides" (NDO) as used in the present invention refers to oligosaccharides which are not digested in the intestine by the action of acids or digestive enzymes present in the human upper digestive tract, e.g. small intestine and stomach, but which are preferably fermented by the human intestinal microbiota. For example, sucrose, lactose, maltose and maltodextrins are considered digestible.

The term "infant formula" as used herein refers to an edible composition for infants from 0 -1 year old. The term infant formula" is well understood by a person skilled in the art as is evident, for instance, from EU regulations with respect to the compositional requirements of infant formula (Commission Delegated Regulation (EU) 2016/127 of 25 September 2015 supplementing Regulation (EU) No 609/2013 of the European Parliament and of the Council).

The term "young child formula" as used herein refers to a formula intended and suitable for children from 1-5 years old.

Protein concentrations, unless indicated otherwise, are determined using the Kjeldahl-method, i.e. by measuring total nitrogen content and using a conversion factor 6.25.

The term 'about' in relation to a value, means that the value can be plus minus 10%.

### Edible composition

Examples of edible compositions according to the present invention include nutritional compositions, protein concentrates and protein powders.

Nutritional compositions preferably comprise, calculated by weight of dry matter, 5-50 wt.%, more preferably 7-30 wt.% and most preferably 8-20 wt.% of the non-dairy protein.

Protein concentrates and protein powders preferably comprise 30-100 wt.%, more preferably 60-100 wt.% and most preferably 90-100 wt.% of the non-dairy protein

The chlorate content of the edible composition of the present invention preferably is between 0 and 100 microgram chlorate per kg dry matter, more preferably below 66 microgram per kg dry matter, more preferably below 45 microgram per kg dry matter and most preferably below 35 microgram per kg dry matter.

In a preferred embodiment of the invention, the vegetable protein originates from one or more plants selected from rice, wheat, soy, corn, pea, carob, sunflower, potato, cotton, lentil or chickpea, hemp, pumpkin, fava bean, water lentils and quinoa. In a more preferred embodiment, the vegetable protein originates from one or more plants selected from pea, rice and/or soy. More preferably, the vegetable protein originates from pea and/or rice. Algal proteins are preferably selected from *Chlorella* protein, *Spirulina* protein and combinations thereof.

It is highly desirable that the protein in the present edible composition provides an optimal amino acid composition. The inventors have found that mixtures of vegetable proteins or mixtures of vegetable and algal proteins can provide an optimal amino acid composition. According to a particularly preferred embodiment the non-dairy protein comprises (i) a vegetable protein selected from pea protein, rice protein and combinations thereof and (ii) an algal protein selected from *Chlorella* protein, *Spirulina* protein and combinations thereof. Preferably, the weight ratio of the vegetable protein to algal protein is between 0.3 and 5.5.

The non-dairy protein in the edible composition may be non-hydrolysed or partially hydrolysed. Preferably, the non-dairy protein is (essentially) non-hydrolysed.

The non-dairy protein in the edible composition is preferably obtained by means of ultrafiltration and/or nanofiltration using a filtration membrane having a molecular weight cut-off in the range of 0.5-20 kDa. It is important to use non-chlorated water during the filtration process, e.g. water that is naturally low in chlorate or chlorated water that was first subjected to reverse osmosis process in order to substantially remove the chlorate from the water. If standard chlorated tap water is used (as is commonly done in the industry) the final protein will remain too high in chlorate after the filtration process. Accordingly, in a particularly preferred embodiment, the non-dairy protein contains per kg of the non-dairy protein between about 0 and 1000 microgram, preferably between about 0 and 700 microgram, more preferably between about 0 and 500 microgram, most preferably between about 0 and 400 microgram of low molecular components having a molecular weight of not more than 500 Da.

Besides non-dairy protein, the edible composition preferably further comprises carbohydrates (digestible and indigestible) and lipids (including triglycerides and phospholipids). Even more preferably, the edible composition additionally contains vitamins and minerals.

According to a particularly preferred embodiment, the edible composition according to the present invention is for use in infants or young children. The edible composition is preferably administered to the infants or young children in liquid form.

The liquid form of the edible composition preferably has a caloric density between 0.1 and 2.5 kcal/ml, more preferably a caloric density of between 0.5 and 1.5 kcal/ml, even more preferably between 0.6 and 0.8 kcal/ml, and most preferably between 0.65 and 0.7 kcal/ml.

The present edible composition can be in the form of a dry food, preferably in the form of a powder. The dry food is preferably accompanied with instructions to mix the dry food, preferably powder, with a suitable liquid, preferably water. The present edible composition may thus be in the form of a powder, suitable to reconstitute with water to provide a ready-to-drink edible composition, preferably a ready-to-drink infant formula or young child formula, more preferably a ready-to-drink infant formula.

The present edible composition preferably comprises lipid, protein and digestible carbohydrate wherein the lipid provides 25 to 65% of the total calories, the protein provides 6.5 to 16% of the total calories, and the digestible carbohydrate provides 20 to 80% of the total calories. Preferably, in the present edible composition the lipid provides 30 to 55% of the total calories, the protein provides 7 to 9% of the total calories, and the digestible carbohydrate provides 35 to 60% of the total calories. For calculation of the % of total calories for the protein, the total of energy provided by proteins, peptides and amino acids needs to be taken into account.

Preferably the lipid provides 3 to 7 g lipid per 100 kcal, preferably 3.5 to 6 g per 100 kcal, the protein provides 1.5 to 4 g per 100 kcal, preferably 1.7 to 2.3 g per 100 kcal and the digestible carbohydrate provides 5 to 20 g per 100 kcal, preferably 8 to 15 g per 100 kcal of the edible composition. Preferably the present edible composition comprises lipid providing 3.5 to 6 g per 100 kcal, protein providing 1.5 to 2.3 g per 100 kcal and digestible carbohydrate providing 8 to 15 g per 100 kcal of the edible composition.

Preferably the lipid provides 2.5 to 6.5 g lipid per 100 ml, preferably 2.5 to 4 g per 100 ml, the protein provides 1 to 3 g per 100 ml, preferably 1 to 1.5 g per 100 ml and the digestible carbohydrate provides 3 to 13 g per 100 ml, preferably 5 to 10 g per 100 ml of the edible composition. Preferably the present edible composition comprises lipid providing 2.0 to 6.5 g per 100 ml, protein providing 1 to 3 g per 100 ml and digestible carbohydrate providing 5 to 10 g per 100 ml of the edible composition.

Preferably the lipid provides 15 to 45 wt.%, preferably 20 to 30 wt.%, based on dry weight of the composition, the protein provides 8 to 20 wt.%, preferably 8.5 to 11.5 wt.%, based on dry weight of the composition and the digestible carbohydrates comprise 25 to 90 wt.%, preferably 40 to 75 wt.%, based on dry weight of the composition. Preferably the present edible composition comprises lipid providing 20 to 30 wt.%, protein providing 8.5 to 11.5 wt.% and digestible carbohydrate providing 40 to 75 wt.%, all based on dry weight of the composition.

Preferably the present composition comprises a combination of vegetable oil and at least one oil selected from the group consisting of fish oil, algae oil, fungal oil, and bacterial oil.

Preferably the present edible composition comprises at least one, preferably at least two lipid sources selected from the group consisting of rape seed oil (such as colza oil, low erucic acid rape seed oil and canola oil), high oleic sunflower oil, high oleic safflower oil, olive oil, marine oils, microbial oils, coconut oil and palm kernel oil.

### Protein

The present edible composition preferably comprises 1.5 to 4.0 g protein per 100 kcal of the edible composition, preferably providing 1.7 to 2.3 g per 100 kcal of the edible composition.

When in liquid form, as a ready-to-feed liquid, the edible composition preferably comprises 1.0 to 3.0 g, more preferably 1.0 to 1.5 g protein per 100 ml.

Based on dry weight the present edible composition preferably comprises 8 to 20 wt.% protein, more preferably 8.5 to 11.5 wt.%, based on dry weight of the total edible composition

Besides non-dairy protein, the edible composition according to the present invention may contain dairy protein. Preferably the weight ratio of the non-dairy protein to dairy protein is higher than 1, preferably between 1 and 4, more preferably between 2 and 6 and most preferably between 3 and 10.

In an alternative preferred edible embodiment, the edible composition does not contain dairy protein.

### Carbohydrates

Many dairy proteins, as in human and bovine milk, are glycosylated. In contrast, non-dairy proteins are largely non-glycosylated and therefore lack these important carbohydrates that potentially have many beneficial effects in the infant. It is therefore beneficial to add at least one, but preferable several so called 'human' milk oligosaccharides such as 3'-FL, 2'-FL, 3'-GL, etc (see below) to the infant formula according to the present invention.

The edible composition of the present invention preferably comprises 2'-fucosyllactose (2-'FL). Fucosyllactose (FL) is a non-digestible oligosaccharide present in human milk. It is not present in bovine milk. It consists of three monose units, fucose, galactose and glucose linked together. Lactose is a galactose unit linked to a glucose unit via a beta 1,4 linkage. A fucose unit is linked to a galactose unit of a lactose molecule via an alpha 1,2 linkage (2'-fucosyllactose, 2'-FL) or via an alpha-1,3 linkage to the glucose unit of a lactose (3'-Fucosyllactose, 3'-FL). 2'-FL, preferably α-L-Fuc-(1→2)-β-D-Gal-(1→4)-D-Glc, is commercially available, for instance from Sigma-Aldrich. 2'-FL is believed to improve intestinal barrier function and to support the immune system.

Preferably, the edible composition according to the invention comprises 10 mg to 1 g 2'-FL per 100 ml, more preferably 20 mg to 0.5 g, even more preferably 40 mg to 0.2 g 2'-FL per 100 ml.

Based on dry weight, the present edible composition preferably comprises 0.075 wt.% to 7.5 wt.% 2'-FL, more preferably 0.15 wt.% to 3.75 wt.% 2'-FL, even more preferably 0.3 wt.% to 1.5 wt.% 2'-FL.

Based on energy, the present edible composition preferably comprises 0.015 to 1.5 g 2'-FL per 100 kcal, more preferably 0.03 to 0.075 g 2'-FL per 100 kcal, even more preferably 0.06 to 0.3 g 2'-FL per 100 kcal.

The edible composition of the present invention preferably comprises 3'-galactosyllactose (3'-GL). Preferably the 3'-GL is the trisaccharide Gal-(beta 1,3)-Gal-(beta 1,4)-Glc. 3'-GL is believed to improve the intestinal barrier function.

The edible composition according to the present invention preferably comprises 0.07 to 3.75 wt.% 3'-GL, based on dry weight of the edible composition. In a preferred embodiment, the edible composition comprises 0.07 to 0.375 wt.% 3'-GL, based on dry weight of the edible composition. In another preferred embodiment, the edible composition comprises 1.125 to 1.725 wt.% 3'-GL, based on dry weight of the edible composition.

The edible composition according to the present invention preferably comprises 15 to 750 mg 3'-GL, per 100 kcal of the edible composition. In a preferred embodiment, the edible composition comprises 15 to 75 mg 3'-GL, per 100 kcal of the edible composition. In another preferred embodiment, the edible composition comprises 225 to 375 mg 3'-GL, per 100 kcal of the edible composition.

The edible composition according to the present invention preferably comprises 10 to 500 mg 3'-GL , per 100 ml of the edible composition. In a preferred embodiment, the edible composition comprises 10 to 50 mg 3'-GL, per 100 ml of the edible composition. In another preferred embodiment, the edible composition comprises 150 to 250 mg 3'-GL, per 100 ml of the edible composition.

In a preferred embodiment, the weight ratio of 2'-FL to 3'-GL is in the range of 10:1 to 1:10, preferably 5:1 to 1:5, more preferably 3:1 to 1:3.

Besides the above mentioned human milk oligosaccharides, the present edible composition may suitably contain other galacto-oligosaccharides, preferably beta-galacto-oligosaccharides (BGOS). A mixture of galacto-oligosaccharides (GOS) with different sizes and linkages will have an increased beneficial effect on the microbiota and an improved production of short chain fatty acids, which in its turn have a further improving effect on the immune system and/or on treatment or prevention of infections, in particular intestinal infections. The presence of GOS other than beta3'-GL will in particular have an additional effect on the intestinal barrier function in the large intestine and end of the small intestine, whereas the beta3'-GL will be also - and mostly - effective in the small intestine. The combination of 2'-FL and 3'-GL and GOS therefore will have a further improved effect on health, in particular on improving the intestinal barrier function, on improving the immune system, on improving the intestinal microbiota and/or on the treatment or prevention of infections, in particular intestinal infections.

Preferably the edible composition comprises at least 250 mg GOS per 100 ml, more preferably at least 400 even more preferably at least 600 mg per 100 ml. Preferably the edible composition does not comprise more than 2500 mg of GOS per 100 ml, preferably not more than 1500 mg, more preferably not more than 1000 mg. More preferably, the edible composition according to the present invention comprises GOS in an amount of 250 to 2500 mg/100 ml, even more preferably in an amount of 400 to 1500 mg/100ml, even more preferably in an amount of 600 to 1000 mg/100 ml.

Preferably the edible composition comprises at least 1.75 wt.% of GOS based on dry weight of the total composition, more preferably at least 2.8 wt.%, even more preferably at least 4.2 wt.%, all based on dry weight of the total composition. Preferably the edible composition does not comprise more than 17.5 wt.% of GOS based on dry weight of the total composition, more preferably not more than 10.5 wt.%, even more preferably not more than 7 wt.%. The edible composition according to the present invention preferably comprises GOS in an amount of 1.75 to 17.5 wt.%, more preferably in an amount of 2.8 to 10.5 wt.%, most preferably in an amount of 4.2 to 7 wt.%, all based on dry weight of the total composition.

Preferably, the present edible composition comprises fructo-oligosaccharides (FOS). The term "fructo-oligosaccharides" as used in the present invention refers to carbohydrates composed of over 50%, preferably over 65 % fructose units based on monomeric subunits, in which at least 50%, more preferably at least 75%, even more preferably at least 90%, of the fructose units are linked together via a beta-glycosidic linkage, preferably a beta-2,1 glycosidic linkage. A glucose unit may be present at the reducing end of the chain of fructose units.

Preferably, the fructo-oligosaccharides have a DP or average DP in the range of 2 to 250, more preferably 2 to 100, even more preferably 10 to 60. The term "fructo-oligosaccharides" encompasses levan, hydrolysed levan, inulin, hydrolysed inulin, and synthesised fructo-oligosaccharides.

Preferably, the edible composition comprises short chain fructo-oligosaccharides with an average degree of polymerization (DP) of 3 to 6, more preferably hydrolysed inulin or synthetic fructo-oligosaccharide.

Preferably, the edible composition comprises long chain fructo-oligosaccharides with an average DP above 20.

Preferably, the edible composition comprises both short chain and long chain fructo-oligosaccharides. Fructo-oligosaccharide suitable for use in the composition of the invention is commercially available, e.g. RaftilineHP (Orafti).

Preferably, the edible composition according to the present invention comprises at least 25 mg FOS per 100 ml, more preferably at least 40 even more preferably at least 60 mg. Preferably the composition does not comprise more than 250 mg FOS per 100 ml, more preferably not more than 150 mg per 100 ml and most preferably not more than 100 mg per 100 ml. The amount of FOS is preferably 25 to 250 g fructo-oligosaccharides per 100 ml, preferably 40 to 150 g per 100 ml, more preferably 60 to 100 g per 100 ml.

Preferably the edible composition according to the present invention comprises at least 0.15 wt.% FOS based on dry weight, more preferably at least 0.25 wt.%, even more preferably at least 0.4 wt.%. Preferably the composition does not comprise more than 1.5 wt.% FOS based on dry weight of the total composition, more preferably not more than 2 wt.%. The presence of FOS in the edible composition provides a further improved effect on the microbiota and its SCFA production.

### Lipids

The present edible composition preferably comprises one or more lipids selected from triglycerides, diglycerides, monoglycerides, phospholipids and combinations thereof.

The lipids present in the edible composition preferably comprises long chain poly-unsaturated fatty acids (LC-PUFA). Here the term LC-PUFA encompasses both the free fatty acid and the fatty acid residue.

LC-PUFA are fatty acids with a length of 20 to 24 carbon atoms, preferably 20 or 22 carbon atoms, comprising two or more unsaturated bonds. Preferably the edible composition comprises at least one, preferably two, more preferably three LC-PUFA selected from docosahexaenoic acid (DHA), eicosapentaenoic acid (EPA) and arachidonic acid (ARA). These LC-PUFA were found to improve the intestinal barrier function and may therefore be particularly advantageously combined with 2-'FL and 3'-GL and optional butyrate in order to further improve the intestinal barrier. This combination has unexpected advantageous effects and preferably works synergistically.

According to a particularly preferred embodiment, the combination of DHA, ARA and EPA represents 0.4 to 0.9 wt.% of the fatty acids contained in the fat. In the edible composition according to the present invention, preferably the amount of these LC-PUFA is above 1 wt.%, more preferably above 1.1 wt.%, based on total fatty acids. Preferably the amount of these LC-PUFA is not more than 15 wt.%, more preferably not more than 5 wt.%, based on total fatty acids, most preferably not more than 2.5 wt, based on total fatty acids. It is further preferred that the amount of these LC-PUFA is in the range of 1-15 wt.%, preferably 1.1-5 wt.%, more preferably 1.5-2.5 wt.% based on total fatty acids. This is considered most optimal range to be used in infant formula for improvement of intestinal barrier function.

Preferably the concentration of DHA is at least 0.4 wt.%, more preferably at least 0.5 wt.%, based on total fatty acids. Preferably the concentration of DHA is not more than 1 wt.%, more preferably not more than 0.7 wt.%, based on total fatty acids. Preferably the edible composition comprises an DHA in a concentration of 0.4 to 1 wt.%, more preferably 0.5 to 0.7 wt.%, based on total fatty acids.

Preferably the edible composition comprises EPA in a concentration of at least 0.09 wt.%, more preferably at least 0.1 wt.%, based on total fatty acids. Preferably the composition contains not more than 0.4 wt.%, more preferably not more than 0.2 wt.% EPA, based on total fatty acids. Preferably the edible composition comprises EPA in a concentration of 0.09 to 0.4 wt.%, more preferably 0.1 to 0.2 wt.%, based on total fatty acids.

Preferably the edible composition comprises ARA in a concentration of at least 0.25 wt.%, more preferably at least 0.5 wt.%, based on total fatty acids. Preferably the composition contains not more than 1 wt.%, more preferably not more than 0.7 wt.% of ARA, based on total fatty acids. Preferably the edible composition comprises an amount of ARA of 0.4 to 1 wt.%, more preferably 0.5 to 0.7 wt.%.

Preferably the edible composition comprises DHA in amount of 0.4 to 1.0 wt.% based on total fatty acids, and EPA in an amount of 0.09 to 0.4 wt.% based on total fatty acids. More preferably, the edible composition comprises DHA in amount of 0.5 to 0.7 wt.% based on total fatty acids, and EPA in an amount of 0.1 to 0.2 wt.% based on total fatty acids. It is particularly preferred that the edible composition comprises DHA in amount of more than 0.5 wt.% based on total fatty acids, and EPA in an amount of more than 0.1 wt.% based on total fatty acids. Preferably the edible composition comprises DHA, EPA, and ARA in amount of 0.4 to 1.0 wt.%, of 0.09 to 0.4 wt.%, and of 0.25 to 1.0 wt % based on total fatty acids, respectively. More preferably the edible composition comprises DHA, EPA, and ARA in amount of 0.5 to 0.7 wt.%, of 0.1 to 0.2 wt.%, and of 0.5 to 0.7 wt % based on total fatty acids, respectively.

Preferably the edible composition comprises DHA in amount of 20 to 50 mg/100 kcal and EPA in an amount of 4.3 to 10.8 mg/100 kcal. More preferably the edible composition comprises DHA in an amount of 25 to 33.5 mg/100 kcal and EPA in an amount of 5.4 to 7.2 mg/100 kcal. Most preferably the edible composition comprises DHA in amount of about 25 mg/100 kcal and EPA in an amount of about 5.4 mg/100 kcal. In these embodiments the presence of ARA is optional. If present, the amount of ARA is preferably 12.5 to 50 mg, more preferably 25 to 33.5 mg and most preferably about 25 mg per 100 kcal. Preferably the weight ratio of DHA/ARA is from 0.9 to 2.

Preferably the weight ratio of DHA/EPA/ARA is 1: (0.19 -0.7) : (0.9-2.0). Such amounts and/or ratios of DHA, EPA and ARA are optimal for further improving the intestinal barrier function, for further improving the intestinal microbiota and/or for treatment or prevention of infections, in particular intestinal infections. The LC-PUFA may be provided as free fatty acids, in triglyceride form, in diglyceride form, in monoglyceride form, in phospholipid form, or as a mixture of one of more of the above. Suitable sources of these LC-PUFA are e.g. fish oil and oil from *Mortierella alpine,* preferably oil from a non-animal source like algae origin is used in order to be able to make the product suitable for vegetarian or vegan-fed infants.

The present edible composition preferably comprises digestible carbohydrate providing 5 to 20 g per 100 kcal, preferably 8 to 15 g per 100 kcal. Preferably the amount of digestible carbohydrate in the present edible composition is 25 to 90 wt.%, more preferably 8.5 to 11.5 wt.%, based on total dry weight of the composition. Preferred digestible carbohydrates are lactose, glucose, sucrose, fructose, galactose, maltose, starch and maltodextrin, preferably maltodextrin since this provides low osmolarity and is not sweet.

The edible composition according to the invention is preferably not sweet in order to prevent the infant from getting accustomed to sweet taste, and to prevent carries in the developing teeth of the infant.

### Application

The present edible composition is preferably an infant formula or a young child formula. Examples of a young child formula are toddler milk, toddler formula and growing up milk. More preferably the edible composition is an infant formula.

The present edible composition can be advantageously applied as a complete nutrition for infants. An infant formula is defined as a formula for use in infants and can for example be a starter formula, intended for infants of 0 to 6 or 0 to 4 months of age. At this age infants start weaning on other food. A young child formula, or toddler or growing up milk or formula is intended for children of 12 to 36 months of age. Preferably the present edible composition is an infant formula.

The edible composition according to the invention is for use in providing nutrition to an infant or young child, preferably an infant, preferably up to 12 months of age.

The preferred embodiments described above for the infant formula and young child formula according to the invention also apply to the present infant formula for use and young child formula for use.

### Method of preparing the edible composition

Another aspect of the invention relates to a method of preparing the edible composition described herein, said method comprising combining a non-dairy protein component with one or more other edible ingredients, said non-dairy protein component containing at least about 60 wt.%, calculated by weight of dry matter, of non-dairy protein selected from vegetable protein, algal protein and combinations thereof, and said non-dairy protein component having a chlorate level of between about 0 and 700 microgram per kg of the non-dairy protein, preferably between about 0 and 500 microgram chlorate per kg of the non-dairy protein, more preferably between about 0 and 400 microgram chlorate per kg of the non-dairy protein. This way, the skilled person can obtain a composition which is characterized in terms of between about 0 and 700 microgram chlorate (or any of the preferred subranges here above) per kg of the non-dairy protein, and/or between 0 and 10 microgram chlorate per 100 g dry weight of the composition.

### Non-dairy protein component

The non-dairy protein component that is employed in the present method preferably contains, calculated by weight of dry matter, at least 70 wt.%, more preferably at least 75 wt.% of the non-dairy protein.

According to another preferred embodiment, the non-dairy protein component that is employed in the present method contains, calculated by weight of dry matter, at least 70 wt.%, more preferably at least 75 wt.% of vegetable protein.

The non-dairy protein component preferably does not contain dairy protein, more preferably, the non-dairy protein component does not contain animal protein.

In a preferred embodiment of the invention, the vegetable protein originates from one or more plants selected from rice, wheat, soy, corn, pea, carob, sunflower, potato, cotton, lentil or chickpea, hemp, pumpkin, fava bean, water lentils and quinoa. In a more preferred embodiment, the vegetable protein originates from pea and/or rice. Algal proteins are preferably selected from *Chlorella* protein, *Spirulina* protein and combinations thereof.

The non-dairy protein that is employed in accordance with the present invention may be non-hydrolysed or partially hydrolysed. Preferably, the non-dairy protein is essentially non-hydrolysed. Non-hydrolysed non-dairy protein has the advantage that it is less complex to subject to ultrafiltration, economically accessible, requires less processing steps (less footprint) and does not have a bitter taste.

In a preferred embodiment according to the invention the non-dairy protein component has a chlorate level of between about 0-500 microgram chlorate per kg protein, more preferably between about 0-400 microgram per kg protein, even more preferably between about 0-200 microgram per kg protein and most preferably between about 0-100 microgram per kg protein.

The non-dairy protein component employed in accordance with the present invention is preferably obtained by means of ultrafiltration and/or nanofiltration using a filtration membrane having a molecular weight cut-off in the range of 0.5-20 kDa. Accordingly, in a particularly preferred embodiment, the non-dairy protein component contains per kg of protein between about 0 and 1000 microgram, preferably between about 0 and 700 microgram, more preferably between about 0 and 500 microgram, most preferably between about 0 and 400 microgram of low molecular components having a molecular weight of not more than 500 Da.

It is highly desirable for the protein in the present edible composition to provide an optimal amino acid composition. The inventors have found that mixtures of vegetable proteins or mixtures of vegetable and algal proteins can provide an optimal amino acid composition. According to a particularly preferred embodiment the non-dairy protein component comprises (i) a vegetable protein selected from pea protein, rice protein and combinations thereof and (ii) an algal protein selected from *Chlorella* protein, *Spirulina* protein and combinations thereof. Preferably, the weight ratio of the vegetable protein to algal protein is between 0.3 and 5.5.

### Other edible ingredients

Besides non-dairy protein, the edible composition that is prepared by the present method preferably contains carbohydrates and lipid. Accordingly, in a preferred embodiment, the method comprises mixing the non-dairy protein component with a lipid component and a carbohydrate component, the lipid component containing at least about 60 wt.%, calculated by weight of dry matter, of lipids and the carbohydrate component containing at least about 60 wt.%, calculated by weight of dry matter, of carbohydrates.

According to a preferred embodiment, the present method comprises admixing a source of non-digestible oligosaccharides, said source of non-digestible oligosaccharides containing, calculated by weight of dry matter, 3-15 wt.%, more preferably 5-13 wt.% of non-digestible oligosaccharides selected from non-digestible galacto-oligosaccharides, non-digestible fructo-oligosaccharides, human milk oligosaccharides and combinations thereof.

According to a particularly preferred embodiment, the method comprises admixing a source of non-digestible oligosaccharides containing, calculated by weight of dry matter, 0.5-5 wt.%, more preferably 1-3 wt.% of human milk oligosaccharide selected from 2'-FL human milk oligosaccharide, 3'-GL human milk oligosaccharide and combinations thereof.

In accordance with yet another preferred embodiment, the method further comprises admixing of a source of long chain polyunsaturated fatty acids (LC-PUFA), said source of LC-PUFA containing, calculated by weight of the total fatty acid content of the source of LC-PUFA, at least 0.5 wt.%, more preferably 0.5-1.5 wt.% of LC-PUFA selected form the group of DHA, ARA, EPA and combinations thereof.

The present method preferably further comprises admixing one or more of micronutrient components selected from vitamin D, calcium and phosphate.

### Purification of the non-dairy protein

A further aspect of the invention relates to a process of purifying non-dairy protein selected from vegetable protein, algal protein and combinations thereof, said process comprising the step of filtering an aqueous solution of the non-dairy protein over a membrane filter having a molecular weight cut-off of 1-20 kDa, preferably of 3-15 kDa, said process comprising the addition of low chlorate water prior to the filtration step, said low chlorate water having a chlorate content between about 0 and 100 microgram per liter.

Low chlorate water may be obtained from natural sources or treated tap water e.g. reversed osmosis can be used to treat the water in order to decrease chlorate levels.

Chlorates will not be removed from the tap water using standard methods used for water purification such as active carbon filtration, on the contrary, the use of chlorine gas and chlorine dioxide during drinking water treatment only results in higher levels of chlorate in tap water. Furthermore, if not taken care of, chlorate can also end-up in protein products when these chlorine disinfectants are used in the production process of the non-dairy protein.

Because of the above, ultrafiltration itself does not inherently result in reduced one cannot know if a purified protein source using ultrafiltration has a low chlorate content.

In the present process, the aqueous solution of the dairy protein is preferably prepared by combining a protein concentrate containing 20-100 wt.%, preferably 40-100 wt.% of the non-dairy protein with the low chlorate water.

The low chlorate water preferably has a chlorate content of between about 0 and 200 microgram per liter, more preferably between about 0 and 100 microgram per liter, most preferably between 0 and 10 microgram per liter.

The low chlorate water preferably is water that has undergone reverse osmosis or that has been contacted with an anion exchange resin to remove chlorate.

The vegetable protein that is purified in the present process preferably originates from one or more plants selected from rice, wheat, soy, corn, pea, carob, sunflower, potato, cotton, lentil or chickpea, hemp, pumpkin, fava bean, water lentils and quinoa. In a more preferred embodiment, the vegetable protein originates from pea and/or rice. Algal protein is preferably selected from *Chlorella* protein, *Spirulina* protein and combinations thereof.

Preferably, the non-dairy protein that is purified in the present process is essentially non-hydrolysed.

The aqueous solution of the dairy protein that is subjected to the filtration step preferably contains 1-20 wt.%, more preferably 2-15 wt.% and most preferably 3-12 wt.% of the non-dairy protein.

### Use of non-dairy protein component

Yet another aspect of the invention relates to the use of a non-dairy protein component for preparing an edible composition selected from an infant formula and a young child formula, said non-dairy protein component containing at least about 60 wt.%, calculated by weight of dry matter, of non-dairy protein selected from vegetable protein, algal protein and combinations thereof, and said non-dairy protein component having a chlorate level of less than about 700 microgram per kg protein.

Preferred embodiments of the non-dairy protein component and of the edible composition have already been described above.

### EXAMPLES

### Example 1. Method for preparing vegetable protein with low chlorate levels

A commercially available pea protein concentrate (Roquette Naturalys S85F) was dissolved in demineralized water to create 1200 g of a 5 wt.% (total solids) solution. This solution was then separated into 400 g Feed Sample to measure the initial composition of the mix and an 800 g sample that was loaded to the feed tank of a filtration unit to undergo chlorate removal via filtration.

The filtration system was a lab scale triple chamber system (MMS Lab System 12006). The feed tank was double jacketed and connected to a water bath (Thermo Scientific NesLab Themoflex 2500) able to maintain a temperature between 4-50 °C. Each filter was hand cut from the respective membrane sheets to produce a circular membrane disk of approximately 78 mm diameter, providing a total filtration area of 14,335 mm² (0.014 m²). Four different types of filters (two ultrafiltration and two nanofiltration) were used with nominal MWCOs of 10,000 (Nadir UP010 P), 5,000 (Nadir UP005 P), 1,000 (Nadir NP030 P) and 500 Da (Nadir NP010 P), respectively.

The unit was operated in discontinuous batch diafiltration mode for each membrane. The feed was passed over one of each of the four filtration membranes, with the permeate being collected in a vessel on an electronic balance and the retentate being recycled to the feed tank. After 200 mL of permeate had been collected, the feed pump was stopped and 200 mL of deionized water was added to the feed tank, to adjust the total solids to, approximately, 5 wt.%. This process was repeated twice for each sample, finally producing 800 g of approximately 5 wt.% total solids solution.

The filtration unit was controlled, and data displayed through the MMS Lab System 12006 software. All experiments took place with a feed temperature 10 °C that was maintained throughout the experiment. The ultrafiltration membranes (NADIR UP010 P & UP005 P) operated with a feed pressure of 3 bar and NF membranes (Nadir NP030 P & NP010 P) of 30 bar.

Once taken, the feed and reduced chlorate samples were refrigerated and transported on ice to a third party, Eurofins CLF specialized Nutrition Testing Services, for analysis. Chlorate levels were determined using LC-MS-MS. The samples were extracted with methanol, then the analytes are separated by HPLC and detected by Mass spectrometry. This method has a limit of quantification (LOQ) of 0.01 mg/kg.

The analytical results are shown in Table 1.

**Table 1**

| **Type** | **MWCO** in Dalton | **Protein (N*6.25)** in g/100g sample | **Chlorate** in mg/kg sample | **Chlorate** in µg/kg protein |
|---|---|---|---|---|
| Feed | | 3.43 | 0.04 | 1,166 |
| | | | | |
| Retentate | 10,000 | 3.84 | 0 | 0 |
| Permeate | 10,000 | 0.03 | 0.04 | 133,333 |
| | | | | |
| Retentate | 5,000 | 3.89 | 0 | 0 |
| Permeate | 5,000 | 0.04 | 0.04 | 100,000 |
| | | | | |
| Retentate | 1,000 | 4.1 | 0.02 | 488 |
| Permeate | 1,000 | 0 | 0.03 | ∞ |
| | | | | |
| Retentate | 500 | 4.84 | 0.02 | 413 |
| Permeate | 500 | 0 | 0.02 | ∞ |

Chlorate levels after UF with 10k and 5k filters resulted in complete removal of the chlorate from the pea protein sample. Even if samples are dried to increase concentration of the protein, the measured chlorate levels stayed below detection limit in the UF treated protein samples. Protein loss was very low.

### Example 2 method for preparing vegetable protein with low chlorate levels

A commercially available pea protein concentrate (Roquette Naturalys S85F) was dissolved in reverse osmosis water (Mill Q RiOS 200) to create 80 kg of a 5 wt.% (total solids) solution. This solution was then separated into 400 g Feed Sample to measure the initial composition of the mix and the remaining solution was loaded to the feed tank of the filtration unit to undergo chlorate removal via filtration.

The filtration system was a pilot scale APV filtration unit. The RO water was chilled to 4 °C via a double jacket. Two Microdyn Nadir 10 kDa SpiraCel UP010 3838 C1 filters were used. Each filter had a filtration area of approximately 5,7 m²), providing a total filtration area of 11,4 m².

The unit was operated in constant volume, continuous diafiltration. The permeate was sent to waste and the retentate was recycled to the feed tank. After 340 kg of diafiltration water was used, the first chlorate reduced sample, approximately 5 wt.% total solids, was collected and the second sample, approximately 5 wt.% total solids, after approximately 850 kg of diafiltration water was added and removed.

The filtration unit was controlled manually. The filtration process was operated with a feed pressure of 1 bar and a booster pressure of 3 bars.

The reduced chlorate samples so obtained were concentrated by evaporation to approximately 15% total solids and spray dried. The dry samples were analysed as in Example 1.

The spray dried protein samples had chlorate levels below detection limit. This confirmed that the protein batches were free of chlorate, and that vegetable protein can be made with 0 - 100 microgram chlorate per kg protein.

### Example 3. Method for preparing vegetable protein with low chlorate levels

A commercially available pea protein concentrate (Roquette Naturalys S85F and ) and pumpkin protein concentrate (Biooriginal Pumpkin Organic Protein 60% powder) were separately dissolved in demineralized water (Milli Q RiOS 200) to create 1200 g of 5 wt.% total solids solutions. These solutions were then spiked with sodium chlorate, to increase the chlorate level of the samples (target of 18 mg/kg for pea and 0.08 mg/kg for pumpkin). A 400 g sample was taken from the solutions to measure the initial composition. The remaining solutions were introduced into the feed tank of a filtration unit to undergo chlorate removal.

The filtration system used was the same as in Example 1. The ultrafiltration membrane has a nominal MWCO of 10,000 Da.

The unit was operated in discontinuous batch diafiltration mode. The permeate was collected in a vessel on an electronic balance and the retentate was recycled to the feed tank. After 300 mL (for pea) or 400 mL (for pumpkin) of permeate had been collected, the feed pump was stopped and the same volume of deionized water was added to the feed tank, to adjust the total solids to, approximately, 5 wt.%. This process was repeated 6 times for pea and 3 times for pumpkin samples, finally producing 500 g, respectively 400 g of approximately 10 wt.% total solids solutions.

The filtration unit was controlled, and data displayed through the MMS Lab System 12006 software. A feed temperature of 10 °C was maintained throughout the experiment. The ultrafiltration membrane (NADIR UP010 P) was operated with a feed pressure of 3 bar.

Products were analysed in the same way as in Example 1. The results are shown in Tables 2 and 3.

**Table 2 - pea protein spiked with sodium chlorate**

| | **Protein (N*6.25)** g/100g sample | **Chlorate** mg/kg sample | **Chlorate** in µg/kg protein |
|---|---|---|---|
| Feed | 3.61 | 1.81 | 59,139 |
| Final Retentate | 5.35 | <0.01 | <187 |

**Table 3 - pumpking protein spiked with sodium chlorate**

| | **Protein (N*6.25)** g/100g sample | **Chlorate** mg/kg sample | **Chlorate** in µg/kg protein |
|---|---|---|---|
| Feed | 2.10 | 0.08 | 3,809 |
| Final Retentate | 4.64 | <0.01 | <216 |

As can be seen from the results using this filtration method to wash the protein resulted in a protein retentate that did not contain any detectable chlorate. The filtration step did also not lead to any significant protein loss.

### Example 4. Method for preparing vegetable protein with low chlorate levels

A commercially available soy protein concentrate (Solae Soy Protein Isolate 772 LN IP, Dupont) was dissolved in demineralized water (TBC) to create 1200 g of a 5 wt.% total solids solution. This solution was then separated into 400 g Feed Sample to measure the initial composition of the mix and an 800 g sample that was loaded to the feed tank of a filtration unit to undergo chlorate removal.

The filtration system used was the same as in Example 1. The ultrafiltration membrane has a nominal MWCO of 10,000 Da.

The unit was operated in discontinuous batch diafiltration mode. After 400 mL of permeate had been collected, the feed pump was stopped and 400 mL of deionized water was added to the feed tank, to adjust the total solids to, approximately, 5 wt.%. This process was repeated twice, finally producing 400 g of approximately 10 wt.% total solids solution.

The filtration unit was controlled, and data displayed through the MMS Lab System 12006 software. A feed temperature of 10 °C was maintained throughout the experiment. The ultrafiltration membrane (NADIR UP010 P) was operated with a feed pressure of 10 bar.

Protein and chlorate concentrations were measured as described in Example 1. The results are shown in Table 4.

**Table 4**

| | **Protein (N*6.25)** g/100g sample | **Chlorate** mg/kg sample | **Chlorate** in µg/kg protein |
|---|---|---|---|
| Feed | 4.23 | 0.04 | 846 |
| Retentate | 7.36 | <0.01 | <136 |

As can be seen from the results using this filtration method to wash the protein resulted in a protein retentate that did not contain any detectable chlorate. The filtration step did also not lead to any significant protein loss.

### Example 5. Method for preparing soy protein with low chlorate levels

Similar to example 2, a trial was done with soy protein. The final retentate was similarly spray-dried in order to concentrate the protein and measure the chlorate in a more concentrated sample.

Another batch soy protein concentrate as in example 5 from the same supplier (Solae Soy Protein Isolate 772 LN) was dissolved in Reverse Osmosis water (MiliQ Rios 200) to create 80 kg of a 5% TS pea protein solution. This solution was then separated into 400 g Feed Sample to measure the initial composition of the mix and the remaining solution was loaded to the feed tank of the filtration unit to undergo chlorate removal via filtration.

The filtration system was a pilot scale APV filtration unit. The RO water was chilled to 50 °C via a double jacket and was able to maintain a temperature between 40-60 °C. Two Microdyn Nadir 10 kDa SpiraCel UP010 3838 C1 filters were used. Each filter has a filtration area of approximately 5.7 m²), providing a total filtration area of 11.4 m². The unit was operated in constant volume batch mode with continuous diafiltration. The feed passed over the membranes, with the permeate sent to waste and the retentate was recycled to the feed tank. After 340 kg of diafiltration water was used, the first chlorate reduced sample, approximately 5% TS, was collected and the second sample, approximately 5% TS, after approximately 850 kg of diafiltration water was added and removed.

The filtration unit was controlled manually. The filtration process was operated with a feed pressure of 1 bar and a total booster pressure of 3 bars. Filtration is a standard technique in the dairy industry e.g. when separating poor or undigested protein from hydrolysed protein. The skilled person will know using common general knowledge and manufacturer protocols how to perform this process and use in industrial scale.

### Analysis

Once diafiltration was finished, the reduced chlorate sample was concentrated in the UF unit to 10-15% TS and spray dried. The dry samples were transported to a third party, Eurofins CLF specialized Nutrition Testing Services, (Friedrichsdorf Germany), for analysis. Eurofins CLF carried out all analyses of the samples. The analysis methods for protein and chlorates have an uncertainty interval of ± 5% for protein determination and ± 15% for chlorate. The method for analysis chlorate and perchlorate is an internal method using LC-MS-MS and is suitable for applications in food, fruits, vegetables, raw material, water. The sample is extracted with methanol, then the analytes are separated by HPLC and detected by Mass spectrometry. This method has a LOQ (limit of quantification) of 0.002 mg/kg.

### Results

Even after drying of the retentate, the protein samples had chlorate levels below detection limit. This confirmed that the protein batches were free of chlorate, and vegetable protein samples can be made with 0 - 10 microgram chlorate per kg protein.

**Table 5**

| **Chlorate content in soy protein** | **Parameter** | **Protein (N*6.25)** | **Chlorate** | |
|---|---|---|---|---|
| | **Unit** | g/100g | mg/kg sample | mg/kg protein |
| Trial 1 | Feed | 84.7 | 1.65 | 1.95 |
| | Retentate | 90.5 | <LOQ | <LOQ |
| Trial 2 | Feed | 85.4 | 1.50 | 1.76 |
| | Retentate | 88.0 | <LOQ | <LOQ |

In table 5, the feed refers to the initial powder material as purchased from the supplier. The retentate refers to the spray-dried protein powder after UF. As can be seen from the results using this filtration method to wash the protein resulted in a protein retentate that did not contain any detectable chlorate. The filtration step did also not lead to any significant protein loss.

### Example 6. Method for preparing nutritional formulations with low chlorate levels

Infant formulas according to the invention may be prepared in any suitable manner. They may be prepared, for example, by dissolving protein source and carbohydrate source in appropriate proportions in water, preferably reverse osmosis (RO) water, to form a liquid mixture. Minerals and vitamins may be dissolved separately in RO water before being added to the aforementioned liquid mixture. The pH of the liquid mixture may be adjusted at this point.

Any lipophilic vitamins or other oily compounds may be dissolved in the fat source prior blending and emulsified with the previous mixture with or without online injection. The liquid mixture may then be homogenized and pasteurized. Any thermo-sensitive vitamins and minerals can be added at this point. The pH of the liquid mixture may be adjusted at this point. The liquid mixture may then be thermally treated to reduce bacterial load. This may be achieved by means of steam injection or by using a heat exchanger, for example a tubular or plate heat exchanger. The liquid mixture may then be cooled and/or homogenized.

The homogenized mixture may then be transferred to a suitable drying equipment such as a spray dryer or a freeze dryer and converted to powder and then nitrogen flushed. If a liquid infant formula is preferred, the homogenized mixture may be sterilized, then aseptically filled into suitable container or be first filled into a container and then retorted.

Not only protein, but also other ingredients like fat, carbohydrate and fibers may add to the total of chlorate content of the composition. Therefore, preferably the other ingredients used are also as low as possible in chlorate level.

Examples of nutritional formulations containing the purified non-dairy protein of the present invention are shown in Table 6.

**Table 6 - Examples of nutritional formulations using non-dairy proteins according to the invention**

| **Examples** | **Caloric density** | **Protein** | **Carbohydrate** | **Fat** | **Other solids** | **Ash** | **Water** | **Optional prebiotics** |
|---|---|---|---|---|---|---|---|---|
| **Of product** | **Kcal/100g** | **g/100g** | | | | | | |
| Pea/soy* Liquid standard energy | 60-70 (63.4) | 1.2-2.4 (1.4) | 5.8-9.2 (5.8) | 2.7-4 (3.9) of which 0.5 DHA | <2 | 0.2-2 | >85 | 0.1-1.5 human milk oligosaccharides 3'-FL, 2'-FL, 3'-GL |
| Pea/soy Liquid low energy | 45-59 (49) | 0.9-1.8 (1.1) | 4.5-7 (4.4) | 2.1-3.1 (3) | <2 | 0.5-2 | >88 | 0.1-1.5 GOS + FOS |
| Pea/soy Powder | 501.4 | 10.7 | 55.2 | 22.2 | <5 | <8 | <3 | <15 Inulin + human milk oligosaccharides 3'-FL, 2'-FL, or 3'-GL |
| Pea/soy Liquid | 60-70 | 1.2-1.5 | 5.9-8.3 | 3-4.1 | <2 | <5 | >70 | 0.1-1.5 human milk oligosaccharides 3'-FL, 2'-FL, or 3'-GL |
| Pea/soy IF Liquid | 60-70 | 1.1-1.9 | 5.9-8.3 | 3-4.1 | <2 | <5 | >70 | 0.1-1.5 short chain and long chain fructo-oligosaccharides |
| Pea/soy Powder | 514.3 | 10.6 | 56.4 | 27.4 | <5 | <2 | <3 | 1 short chain FOS + human milk oligosaccharides 3'-FL, 2'-FL, or 3'-GL |
| Pea/soy+Algae YCF liquid | 60-70 | 0.4 | 1.9 | 1.2 | <0.2 | <0.5 | 80-95 | <0.5 short chain and long chain fructo-oligosaccharides |
| Pea/soy+Algae YCF powder | 537.4 | 10 | 51.8 | 32.6 | <5 | 3.2 | <4 | 1.2 short chain and long chain fructo-oligosaccharides |
| Pea+Rice YCF liquid | 60-70 (63.7) | 1.3 | 6 | 3.8 | <0.7 | <0.5 | >85 | 0 |
| Pea/soy+Chickpea YCF Liquid | 60-70 (64.7) | 1.3 | 6.1 | 3.9 | <0.7 | <0.5 | >85 | 0.1-1.50 |
| Pea/soy+Pumpkin YCF Liquid | 60-70 (64.7) | 1.2 | 6.1 | 3.9 | <0.6 | <0.5 | >85 | 0.1-1.5 |
| Pea/soy+Hemp YCF Liquid | 60-70 (64.7) | 1.3 | 6 | 3.9 | <0.7 | <0.5 | >85 | 0.1-1.5 |
| Pea/soy+Chlorella YCF Liquid | 60-70 (64.7) | 1.2 | 6 | 3.9 | <0.6 | <0.5 | >85 | 0.1-1.5 |
| Pea/soy+Spirulina YCF Liquid | 60-70 (64,7) | 1,3 | 6 | 3,9 | <0,7 | <0,5 | >85 | 0,1-1,5 |
| Pea/soy+Tumeric YCF Liquid | 60-70 (64,7) | 1.4 | 5.8 | 3.9 | | <0.5 | >90 | 0.1-1.5 |
| Pea/soy+rice YCF powder | 503.5 | 9.4 | 55.1 | 27.3 | <5 | <5 | <3 | 0-2 |
| Pea/soy+Chickpea powder | 500 | 10 | 54.5 | 26.9 | <5 | <5 | <3 | 0-2 |

| | | | | | | | | |
|---|---|---|---|---|---|---|---|---|
| * In the table, 'Pea/soy' indicates pea or soy or combination of pea and soy | | | | | | | | |

## Claims

1. An edible composition comprising at least about 1 wt.%, calculated by weight of dry matter, of non-dairy protein selected from vegetable protein, algal protein and combinations thereof, wherein the non-dairy protein is non-hydrolyzed, said composition having between about 0 and 700 microgram chlorate per kg of the non-dairy protein, preferably between about 0 and 500 microgram chlorate per kg of the non-dairy protein, more preferably between about 0 and 400 microgram chlorate per kg of the non-dairy protein.

2. An edible composition comprising protein, lipids and digestible carbohydrates wherein the protein providing 6.5 to 16% of the total calories, and wherein the composition comprises at least about 2 wt%, calculated by weight of dry matter, of non-dairy protein selected from vegetable protein, algal protein and combinations thereof, said composition having between 0 and 10 microgram chlorate per 100 g dry weight.

3. The edible composition according to claim 1 or 2, wherein the edible composition is a powder.

4. The edible composition according to any one of the preceding claims, wherein the edible composition has between 0 and 10 microgram chlorate per 100 g dry weight.

5. The edible composition according to any one of the preceding claims, wherein the vegetable protein originates from one or more plants selected from rice, wheat, soy, corn, pea, carob, sunflower, potato, cotton, lentil or chickpea, hemp, pumpkin, fava bean, water lentils and quinoa.

6. The edible composition according to any one of the preceding claims, comprising 1.5 - 4.0 g non-dairy protein per 100 kcal, wherein the edible composition does not contain dairy protein.

7. The edible composition according to any one of the preceding claims, wherein the non-dairy protein component comprises a vegetable protein selected from pea protein, rice protein and soy protein, and combinations thereof.

8. The edible composition according to any one of the preceding claims, wherein the edible composition also comprises lipids and digestible carbohydrates, protein providing 6.5 to 16% of the total calories, lipids providing 25 to 65% of the total calories and digestible carbohydrates providing 20 to 80% of the total calories.

9. The edible composition according to any one of the preceding claims, wherein the edible composition is an infant formula or a young child formula, preferably an infant formula.

10. The edible composition according to any one of the preceding claims, comprising 7 - 30 wt% calculated by dry matter, of non-dairy protein selected from vegetable protein, algal protein and combinations thereof.

11. The edible composition according to any one of the preceding claims, comprising 1.0 - 3.0 g protein per 100 ml.

12. A method of preparing an edible composition according to any one of the preceding claims, said method comprising combining a non-dairy protein component with one or more other edible ingredients, said non-dairy protein component containing at least about 60 wt.%, calculated by weight of dry matter, of non-dairy protein selected from vegetable protein, algal protein and combinations thereof, and said non-dairy protein component having between about 0 and 700 microgram chlorate per kg of the non-dairy protein, preferably between about 0 and 500 microgram chlorate per kg of the non-dairy protein, more preferably between about 0 and 400 microgram chlorate per kg of the non-dairy protein.

13. A process of purifying non-dairy protein selected from vegetable protein, algal protein and combinations thereof, said process comprising the step of filtering an aqueous solution of the dairy protein over a membrane filter having a molecular weight cut-off of 1-20 kDa, said process comprising the addition of low chlorate water prior to the filtration step, said low chlorate water having a chlorate content of between about 0 and 100 microgram per liter.

14. Use of a non-dairy protein component as prepared in claim 13 for preparing a nutritional composition selected from an infant formula and a young child formula, preferably an infant formula.
